(19) Europäisches Patentamt
European Patent Office
Office européen des brevets

(11) **EP 4 529 154 A1**

(12) **EUROPEAN PATENT APPLICATION**
published in accordance with Art. 153(4) EPC

(43) Date of publication:
26.03.2025 Bulletin 2025/13

(51) International Patent Classification (IPC):
*H04N 7/01* (2006.01)

(21) Application number: 23878926.7

(22) Date of filing: 26.09.2023

(86) International application number:
PCT/CN2023/121354

(87) International publication number:
WO 2024/082933 (25.04.2024 Gazette 2024/17)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 21.10.2022 CN 202211294643

(71) Applicant: DOUYIN VISION CO., LTD.
**Beijing 100041 (CN)**

(72) Inventors:
• **ZHANG, Kexin**
  **Beijing 100028 (CN)**
• **LAI, Shuichang**
  **Beijing 100028 (CN)**
• **ZHAO, Shijie**
  **Beijing 100028 (CN)**

(74) Representative: **Williams, Michael David**
**Marks & Clerk LLP**
**1 New York Street**
**Manchester M1 4HD (GB)**

(54) **VIDEO PROCESSING METHOD AND APPARATUS, AND ELECTRONIC DEVICE AND STORAGE MEDIUM**

(57) Embodiments of the present disclosure provide a video processing method and apparatus, an electronic device, and a storage medium. The method includes: obtaining at least three interlaced frames to be processed, wherein each interlaced frame to be processed is determined based on two adjacent video frames to be processed; inputting the at least three interlaced frames to be processed to an image fusion model obtained by pre-training, to obtain at least two target video frames corresponding to the at least three interlaced frames to be processed, wherein the image fusion model includes a feature processing sub-model and a motion sensing sub-model; and determining a target video based on the at least two target video frames.

```
┌─────────────────────────────────────────────────────────┐
│  Obtain at least three interlaced frames to be processed  │──── S110
└─────────────────────────────────────────────────────────┘
                            │
                            ▼
┌─────────────────────────────────────────────────────────┐
│   Input the at least three interlaced frames to be        │
│   processed to an image fusion model obtained by          │
│   pre-training, to obtain at least two target video       │──── S120
│   frames corresponding to the at least three interlaced   │
│   frames to be processed                                  │
└─────────────────────────────────────────────────────────┘
                            │
                            ▼
┌─────────────────────────────────────────────────────────┐
│  Determine a target video based on the at least two       │──── S130
│  target video frames                                      │
└─────────────────────────────────────────────────────────┘
```

**FIG. 1**

## Description

This application claims priority to Chinese Patent Application No. 202211294643.2, filed with the China National Intellectual Property Administration on Friday, October 21, 2022, the disclosure of which is incorporated herein by reference in its entirety.

FIELD

Embodiments of the present disclosure relate to the technical field of video processing, and for example, to a video processing method and apparatus, an electronic device, and a storage medium.

BACKGROUND

With the continuous development of a network technology, during scanning and displaying of images, to improve the effect of image display, more and more users use a line-by-line scanning method to scan and display images.

However, for an early video previously generated based on interlaced scanning, due to a large time interval of displaying between two images, image quality issues may exist, such as great flickering, tooth patterns, and ghosts in the images. This type of video is referred to as an interlaced video. When an interlaced video is displayed on an existing display interface, the complete video can be displayed only after the video is de-interlaced.

At present, de-interlacing is usually performed on the interlaced video to remove the wire-drawing effect from the interlaced video. However, this method does not achieve a good de-interlacing effect. For example, in a moving object scene, a wire-drawing region is blurry, which can easily lead to loss of details and wire-drawing of an image.

SUMMARY

The present disclosure provides a video processing method and apparatus, an electronic device, and a storage medium, to achieve an effect of effectively recovering video images, for example, video images in a motion scene, so that a significant recovery effect can be achieved.

In a first aspect, the embodiments of the present disclosure provide a video processing method. The method includes:

obtaining at least three interlaced frames to be processed, wherein each interlaced frame to be processed is determined based on two adjacent video frames to be processed;

inputting the at least three interlaced frames to be processed to an image fusion model obtained by pre-training, to obtain at least two target video frames corresponding to the at least three interlaced frames to be processed, wherein the image fusion model includes a feature processing sub-model and a motion sensing sub-model; and

determining a target video based on the at least two target video frames.

In a second aspect, the embodiments of the present disclosure provide a video processing apparatus. The apparatus includes:

an interlaced-frame-to-be-processed obtaining module, configured to obtain at least three interlaced frames to be processed, wherein each interlaced frame to be processed is determined based on two adjacent video frames to be processed;

a target video frame determining module, configured to: input the at least three interlaced frames to be processed to an image fusion model obtained by pre-training, to obtain at least two target video frames corresponding to the at least three interlaced frames to be processed, wherein the image fusion model includes a feature processing sub-model and a motion sensing sub-model; and

a target video determining module, configured to determine a target video based on the at least two target video frames.

In a third aspect, the embodiments of the present disclosure provide an electronic device. The electronic device includes:

one or more processors; and

a storage apparatus, configured to store one or more programs,

wherein the one or more programs, when executed by the one or more processors, cause the one or more processors to implement the video processing method described in any of the embodiments of the present disclosure.

In a fourth aspect, the embodiments of the present disclosure further provide a storage medium including computer-executable instructions. The computer-executable instructions, when executed by a computer processor, are used for performing the video processing method described in any of the embodiments of the present disclosure.

BRIEF DESCRIPTION OF THE DRAWINGS

Throughout the accompanying drawings, identical or similar reference numerals represent identical or similar elements. It should be understood that the accompanying drawings are illustrative, and components and elements may not necessarily be drawn to scale.

FIG. 1 is a flowchart of a video processing method provided according to an embodiment of the present disclosure;

FIG. 2 is a schematic diagram of an image fusion model according to an embodiment of the present disclosure;

FIG. 3 is a schematic diagram of a motion sensing model according to an embodiment of the present disclosure;

FIG. 4 is a flowchart of a video processing method according to an embodiment of the present disclosure;

FIG. 5 is a schematic diagram of a video frame to be processed according to an embodiment of the present disclosure;

FIG. 6 is a schematic structural diagram of a video processing apparatus according to an embodiment of the present disclosure; and

FIG. 7 is a schematic structural diagram of an electronic device provided according to an embodiment of the present disclosure.

DETAILED DESCRIPTION OF EMBODIMENTS

It should be understood that multiple steps recorded in method implementations of the present disclosure can be executed in different orders and/or in parallel. In addition, the method implementations may include additional steps and/or omit the execution of the steps shown. The scope of the present disclosure is not limited in this aspect.

The term "include" and its variants as used herein mean open inclusion, namely, "including but not limited to". The term "based on" is "based at least in part on". The term "one embodiment" means "at least one embodiment". The term "another embodiment" means "at least another embodiment". The term "some embodiments" means "at least some embodiments". Relevant definitions of other terms will be given in the description below.

It should be noted that the concepts such as "first" and "second" mentioned in the present disclosure are only used to distinguish different apparatuses, modules, or units, and are not intended to limit the order or interdependence of the functions performed by these apparatuses, modules, or units.

It should be noted that the modifications of "one" and "plurality" mentioned in the present disclosure are indicative rather than restrictive, and those skilled in the art should understand that unless otherwise explicitly stated in the context, they should be understood as "one or more".

Messages or names of information interacted between a plurality of apparatuses in the implementations of the present disclosure are only for illustrative purposes and are not intended to limit the messages or the scope of the information.

It can be understood that before the use of the technical solutions disclosed in multiple embodiments of the present disclosure, users should be informed of the type, scope of use, usage scenarios, and the like of personal information involved in the present disclosure in accordance with relevant laws and regulations in an appropriate manner, so as to obtain authorization from the users.

For example, in response to receiving an active request of a user, prompt information is sent to the user to clearly remind the user that the personal information of the user needs to be involved in an operation requested to be executed. Thus, the user can independently select whether to provide the personal information to software or hardware such as an electronic device, an application program, a server, or a storage medium that performs the operation of the technical solutions of the present disclosure according to the prompt information.

For example, in response to receiving an active request of a user, prompt information is sent to the user through, for example, a pop-up window where the prompt information can be presented in text. In addition, the pop-up window can also carry a selection control for the user to select whether to "agree" or "refuse" to provide the personal information to the electronic device.

It can be understood that the above notification and the above user authorization obtaining process are only illustrative and do not constitute a limitation on the implementations of the present disclosure. Other methods that meet the relevant laws and regulations can also be applied to the implementations of the present disclosure.

It can be understood that data involved in the technical solutions (including but not limited to the data itself, and obtaining or use of the data) should comply with the requirements of corresponding laws and regulations and relevant provisions.

Before introduction of the present technical solution, exemplary explanations can be provided for application scenarios. When a corresponding target video is generated based on an original video, there are usually three methods used. The first implementation may include de-interlacing interlaced frames to be processed based on a YADIF algorithm to remove the wire-drawing effect of the original video. However, this method has poor recovery effect on a moving object scene, with missing details, wire-drawing of images, and the like. The second implementation may include inputting a plurality of interlaced frames to be processed to an ST-Deint deep learning neural network model that combines temporal-spatial information prediction, and processing interlaced frames to be processed based on a deep learning algorithm. This method can achieve an effect of rough recovery on a motion scene only and has a poor effect on detail recovery, and image wire-drawing still exists. The third implementation may include processing interlaced frames to be processed based on a deep learning model DIN, so that the interlaced frames to be processed is first filled with missing information, and then fused with interfield content, to obtain a processed video. Similar to the second implementation, this method can achieve an effect of rough recovery on a motion scene only and have a poor effect of detail recovery, such as a motion wire-drawing region, so that blurring and loss of details easily occur. Based on the above, it can be seen that the video processing methods in the related art still have poor effect on output video display. In this case, based on the technical solutions of the embodiments of the present disclosure, interlaced frames to be processed can be processed based on an image fusion model including a plurality of sub-models, thereby avoiding the occurrence of missing details, image wire-drawing, blurred images, and the like in an output target video.

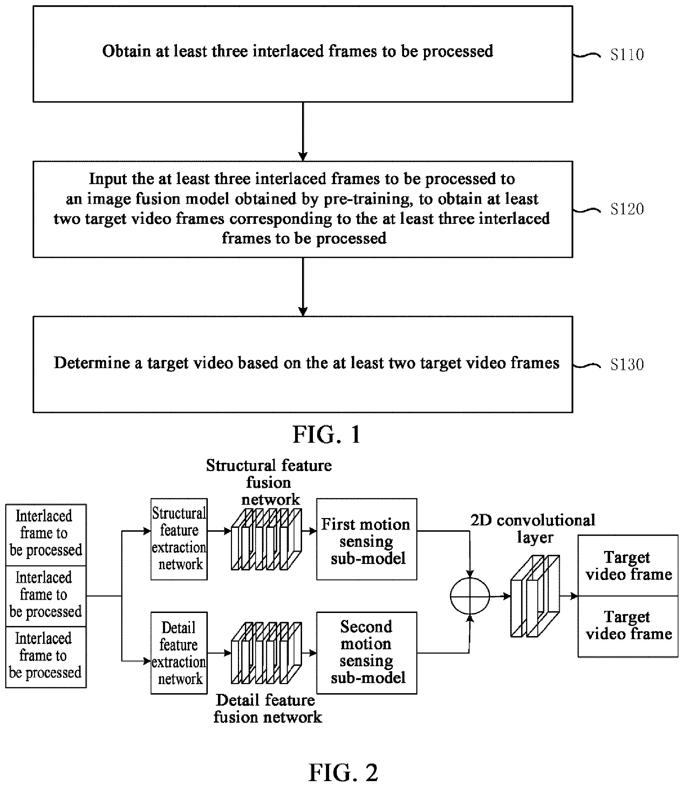

FIG. 1 is a flowchart of a video processing method according to an embodiment of the present disclosure. The embodiment of the present disclosure is applicable to situations of supplementing feature information of an original video subjected to interlaced scanning, so that an obtained target video can be completely displayed on an existing display device. The method can be implemented by a video processing apparatus. The apparatus can be implemented by the form of software and/or hardware, such as an electronic device. The electronic device can be a mobile terminal, a personal computer (PC) end, a server, or the like. The technical solution provided in the embodiments of the present disclosure can be executed based on a client or a server or executed based on cooperation between a client and a server.

As shown in FIG. 1, the method includes:
S110. At least three interlaced frames to be processed are obtained.

Each interlaced frame to be processed is determined based on two adjacent video frames to be processed.

It should be first noted that an apparatus for performing the video processing method provided in the embodiments of the present disclosure can be integrated in application software that supports a video processing function. The software can be installed in an electronic device. For example, the electronic device may be a mobile terminal, a PC end, or the like. The application software may be application software for processing images/videos. The specific application software will not be elaborated here, as long as it can process images/videos. It may also be a specially developed application software integrated in software for achieving video processing and displaying an output video, or is integrated in a corresponding page. A user can process effects videos through a page integrated in the PC end.

In this embodiment, a user can capture a video in real time based on a camera device of a mobile terminal, or actively upload a video based on a pre-developed control in application software. Therefore, it can be understood that the video obtained by the application and captured in real time or the video actively uploaded by the user is a video to be processed. For example, the video to be processed is analyzed based on a pre-written program, to obtain a plurality of video frames to be processed. A person skilled in the art should understand that due to the limitation of a bandwidth and the processing speed of a video apparatus, an early video display method usually uses interlaced scanning. Namely, odd-numbered rows are first scanned to obtain a video frame with render pixel values in odd-numbered rows of pixel points only; then, even-numbered rows are scanned to obtain a video frame with render pixel values in even-numbered rows of pixel points only; and the two video frames are combined to obtain a complete video frame. This display method can cause a large time interval of displaying between two adjacent video frames, leading to image quality issues such as great flickering, tooth patterns, and ghosts in the images. Meanwhile, interlaced scanning is usually used at present for video displaying. Therefore, to display an early video based on an existing video display apparatus, a complete video can be obtained after de-interlacing. Video frames subjected to interlaced scanning can be used as video frames to be processed, namely, the video frame with the render pixel values in the odd-numbered rows of pixel points only or the video frame with the render pixel values in the even-numbered rows of pixel points only; and the video frame obtained by combining the two video frames is an interlaced frame to be processed. The de-interlacing processing means respectively filling missing half-field information with an odd-numbered field and an even-numbered field of the interlaced frame of two adjacent frames of images, to recover the two frames to the size of an original frame, thereby finally obtaining an odd frame and an event frame.

In this embodiment, since the video frame to be processed is the video frame with the render pixel values in the odd-numbered rows of pixel points only or the video frame with the render pixel values in the even-numbered rows of pixel points only, when de-interlacing the video frame to be processed, two adjacent frames of video frames to be processed can be combined to obtain the interlaced frame to be processed. Thus, the interlaced frame to be processed can be de-interlaced.

Exemplarily, $I_1$, $I_2$, $I_3$, $I_4$, $I_5$, and $I_6$ can be used as video frames to be processed. When fusing two adjacent video frames to be processed, $I_1$ and $I_2$ can be combined together to obtain a frame of interlaced frame to be processed $D_1$; $I_3$ and $I_4$ can be combined together to obtain a frame of interlaced frame to be processed $D_2$; and $I_5$ and $I_6$ can be combined together to obtain a frame of video frame to be processed $D_3$. The principle of producing an interlaced frame to be processed can be expressed based on the following formula:

$$D_i = \begin{cases} I_{i*2-1} \\ I_{i*2} \end{cases}$$

It should be noted that the number of the interlaced frames to be processed may be three or more. This embodiment of the present disclosure does not make a specific limitation on this.

Namely, the number of the interlaced frames to be processed corresponds to the number of video frames in the original video, and the number of interlaced frames to be processed input to a model may be three frames or more than three frames.

S120. The at least three interlaced frames to be processed are input to an image fusion model obtained by pre-training, so as to obtain at least two target video frames corresponding to the at least three interlaced frames to be processed.

In this embodiment, after the at least three interlaced frames to be processed are obtained, the interlaced frames to be processed can be input to the pre-trained image fusion model. The image fusion model may be a deep learning neural network model that includes a plurality of sub-models. The image fusion model includes a feature processing sub-model and a motion sensing sub-model.

It should be further noted that in the process of processing based on the image fusion model, the final target video needs to be determined by combining optical flow maps between two adjacent interlaced frames to be processed. Therefore, the number of the interlaced frames to be processed is at least three.

The feature processing sub-model may be a neural network model containing a plurality of convolutional modules. The feature processing sub-model may be used for executing extraction, fusion, and other processing on features in the interlaced frames to be processed. In this embodiment, the feature processing sub-model may include a plurality of 3D convolutional layers, which enables the feature processing sub-model not only to process temporal feature information of a plurality of frames but also to process spatial feature information, thereby enhancing information interaction between the interlaced frames to be processed.

The motion sensing sub-model may be a neural network model used for sensing inter-frame motions. The motion sensing sub-model may be composed of at least one convolutional network, a network containing a Backward Warping function, and a residual network. The Backward Warping function can achieve mapping between images. In practical applications, since inter-frame content between two adjacent frames has strong spatial-temporal correlation, the motion sensing sub-model can be used to process feature information between the frames during the processing of the interlaced frames to be processed, making the inter-frame content more continuous while achieving an effect of mutual supplementation of details.

In this embodiment, after the interlaced frames to be processed are input to the image fusion model, the video frames to be processed can be processed based on the plurality of sub-models in the image fusion model, thereby obtaining the at least two target video frames corresponding to the interlaced frames to be processed.

In practical applications, since the image fusion model includes the plurality of sub-models, during the processing of the interlaced frames to be processed based on the image fusion model, the video frames to be processed can be correspondingly processed in sequence through the plurality of sub-models in the model, thereby outputting the at least two target video frames corresponding to the interlaced frames to be processed.

It should be noted that the image fusion model includes the plurality of sub-models which can be arranged according to a data input/output sequence.

For example, the image fusion model includes a feature processing sub-model, a motion sensing sub-model, and a 2D convolutional layer. The 2D convolutional layer can be a neural network layer that only perform feature processing on the height and width of data.

In this embodiment, determining the arrangement sequence of the plurality of sub-models in the image fusion model based on the data input/output sequence can enable the image fusion model to both process the feature information of the interlaced frames to be processed and sense motions between the plurality of interlaced frames to be processed, making the inter-frame content more continuous and achieving the effect of detail supplementation.

It should be noted that when the interlaced frames to be processed are input to the image fusion model for processing, the solution used in the related art is to split the odd rows and the interlaced frames to be processed according to odd and even rows, namely, to halve the H dimension of the interlaced frames to be processed. Exemplarily, if a matrix of an interlaced frame to be processed is (H × W × C), a matrix after odd and even row splitting is (2/H × W × C). This solution may cause a structural deformation of an object in the interlaced frames to be processed, thereby affecting the visual effect of a target video frame. The processing process of this embodiment of the present disclosure can be understood as splitting the interlaced frames to be processed according to odd and even columns based on splitting the interlaced frames to be processed according to the odd and event rows, namely, using dual feature processing branches, to ensure that during the processing of the interlaced frames to be processed based on the image fusion model, both overall structural feature information and high-frequency detail feature information of the interlaced frames to be processed can be processed.

Based on this, according to the above technical solution, the feature processing sub-model includes a first feature extraction branch and a second feature extraction branch; an output of the first feature extraction branch is an input of a first motion sensing sub-model in the motion sensing sub-model, and an output of the second feature extraction branch is an input of a second motion sensing sub-model in the motion sensing sub-model; and an output of the first motion sensing sub-model and an output of the second motion sensing sub-model are an input of the 2D convolutional layer to cause the 2D convolutional layer to output the target video frame.

In this embodiment, the first feature extraction branch can be a neural network model used for processing structural features of the interlaced frames to be processed. For example, the first feature extraction branch includes a structural feature extraction network and a structural feature fusion network. The structural feature extraction network can be composed of at least one convolutional network, so that the at least one convolutional network can process the interlaced frames to be processed according to a preset structural splitting ratio, to obtain structural features corresponding to the interlaced frames to be processed. The structural feature fusion network can be a neural network with a U-Net structure formed by stacking at least one 3D convolutional layer. It should be noted that the convolution kernels of the at least one 3D convolutional layer can have the same value or different values. The embodiments of the present disclosure do not make a specific limitation on this. Due to the at least three interlaced frames to be processed, the structural feature fusion network can be used for enhancing inter-frame information interaction, so that non only spatial features of the interlaced frames to be processed can be processed, but also temporal features between a plurality of frames can be enhanced.

In this embodiment, the second feature extraction branch can be a neural network model used for processing detail features of the interlaced frames to be processed. For example, the second feature extraction branch includes a detail feature extraction network and a detail feature fusion network. The detail feature extraction network can be composed of at least one convolutional layer, so that the at least one convolutional layer can process the interlaced frames to be processed according to a preset detail splitting ratio, to obtain detail features corresponding to the interlaced frames to be processed. The detail feature fusion network can be a neural network with a U-Net structure formed by stacking at least one 3D convolutional layer. It should be noted that the convolution kernels of the at least one 3D convolutional layer can have the same value or different values. The embodiments of the present disclosure do not make a specific limitation on this. It should be further noted that the detail feature fusion network and the structural feature fusion network may have the same network structure, and effects achieved by the two networks are also the same, namely, enhancing the inter-frame information of the plurality of interlaced frames to be processed. The following may provide a detailed explanation for data input and output of the plurality of sub-models in the image fusion model in conjunction with FIG. 2.

Exemplarily, referring to FIG. 2, the interlaced frames to be processed are respectively input to the first feature extraction branch and the second feature extraction branch. After being processed by the structural feature extraction network and the structural feature fusion network in the first feature extraction branch, the interlaced frames to be processed can be input to the first motion sensing sub-model. Meanwhile, after being processed by the detail feature extraction network and the detail feature fusion network in the second feature extraction branch, the interlaced frames to be processed can be input to the second motion sensing sub-model. For example, after being processed by the first motion sensing sub-model, a model input can be input to the 2D convolutional layer. Meanwhile, after being processed by the second motion sensing sub-model, a model input can be input to the 2D convolutional layer. The 2D convolutional layer can thus be caused to output the target video frames. In this way, the image fusion model can both process the feature information of the interlaced frames to be processed and sense the motions between the interlaced frames to be processed, making the inter-frame content more continuous and achieving the effect of detail supplementation.

In practical applications, after the interlaced frames to be processed are input to the image fusion model, the interlaced frames to be processed can be processed based on the plurality of sub-models in the model, thereby obtaining the target video frames corresponding to the interlaced frames to be processed. In conjunction with FIG. 2, the following will continue to make a specific explanation on the process of processing the interlaced frames to be processed by the image fusion model.

Referring to FIG. 2, the at least three interlaced frames to be processed are input to an image fusion model obtained by pre-training, to obtain at least two target video frames corresponding to the at least three interlaced frames to be processed, which includes: equal-proportional feature extraction is performed on the at least three interlaced frames to be processed based on the structural feature extraction network, to obtain structural features corresponding to the interlaced frames to be processed; odd-even field feature extraction is performed on the at least three interlaced frames to be processed based on the detail feature extraction network, to obtain detail features corresponding to the interlaced frames to be processed; the structural features are processed based on the structural feature fusion network to obtain a first inter-frame feature map between two adjacent interlaced frames to be processed, and the detail features are processed based on the detail feature fusion network to obtain a second inter-frame feature map between two adjacent interlaced frames to be processed; the first inter-frame feature map is processed based on the first motion sensing sub-model to obtain a first fused feature map, and the second inter-frame feature map is processed based on the second motion sensing sub-model to obtain a second fused feature map; and the first fused feature map and the second fused feature map are processed based on the 2D convolutional layer to obtain the at least two target video frames.

In this embodiment, the structural features may be features used for representing overall structural information of the interlaced frames to be processed. The detail features may be features used for representing detail information of the interlaced frames to be processed. The detail features may be high-frequency features, which are features at a higher level than the structural features.

In an example implementation, the interlaced frames to be processed are input to the image fusion model. The equal-proportional dimension reduction can be performed on the interlaced frames to be processed based on the structural feature extraction network, to obtain the structural features corresponding to the interlaced frames to be processed. Meanwhile, the splitting of odd-even field is performed on the interlaced frames to be processed based on the detail feature extraction network, to obtain the detail features corresponding to the interlaced frames to be processed. For example, for the structural features, the structural features can be fused based on the structural feature fusion network. The structural features of two adjacent interlaced frames to be processed are fused, so that the fused feature map between the two adjacent interlaced frames to be processed can be obtained, namely, the first inter-frame feature map can be obtained. Meanwhile, for the detail features, the detail features can be fused based on the detail feature fusion network. The detail features of two adjacent interlaced frames to be processed are fused, so that the fused feature map between the two adjacent interlaced frames to be processed can be obtained, namely, the second inter-frame feature map can be obtained. Then, the first inter-frame feature map is input to the first motion sensing sub-model, and feature supplementation is performed on the first inter-frame feature map based on the first motion sensing sub-model, so that the first fused feature map can be obtained. Meanwhile, the second inter-frame feature map is input to the second motion sensing sub-model, and feature supplementation is performed on the second inter-frame feature map based on the second motion sensing sub-model, so that the second fused feature map can be obtained. Finally, the first fused feature map and the second fused feature map are input to the 2D convolutional layer, and the fused feature maps are processed based on the 2D convolutional layer, so that the at least two target video frames corresponding to the interlaced frames to be processed can be obtained. By the use of the dual feature processing branches, the image fusion model is enabled to process both the overall structural feature information of the interlaced frames to be processed and the detail feature information of the interlaced frames to be processed. In addition, by the use of the 3D convolutional layer, the inter-frame information interaction can be enhanced. By the use of the motion sensing sub-models, the motions between the frames can be sensed, and feature alignment can be performed, making the inter-frame content more continuous, thereby the display effect on the target video frames can be improved.

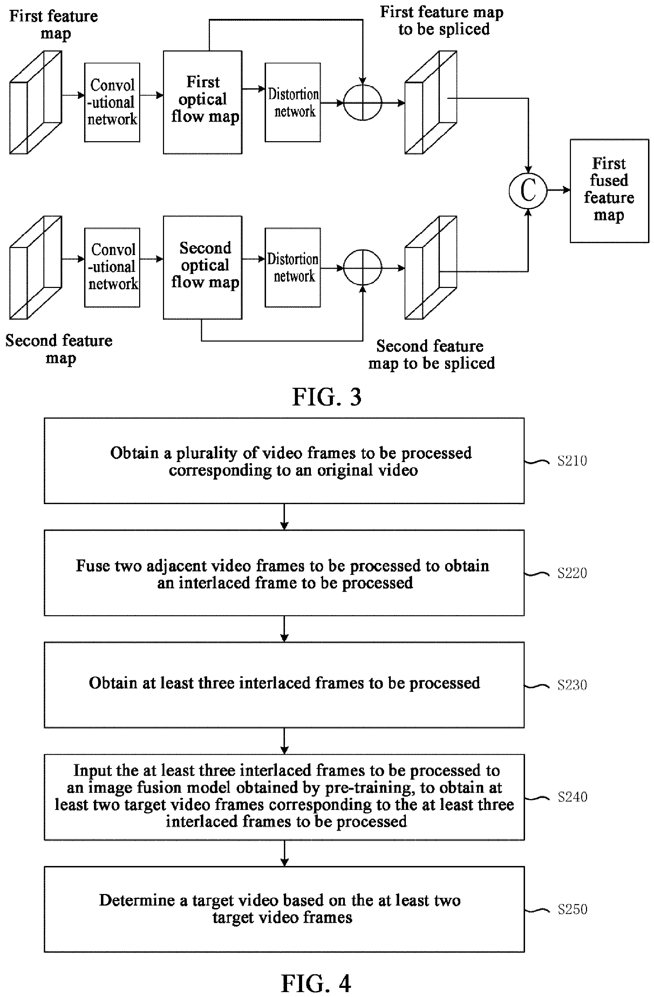

It should be noted that since the first inter-frame feature map is obtained by fusing the structural features of two adjacent interlaced frames to be processed, when there are at least three interlaced frames to be processed, the first inter-frame feature map may include a first feature map and a second feature map. In practical applications, the first inter-frame feature map is processed based on the first motion sensing sub-model, which can be: The first feature map and the second feature map are respectively processed based on the first motion sensing sub-model, thereby obtaining the first fused feature map. In conjunction with FIG. 3, the following may provide a specific explanation on the process of processing the first inter-frame feature map based on the first motion sensing sub-model.

Referring to FIG. 3, the first inter-frame feature map is processed based on the first motion sensing sub-model to obtain a first fused feature map, which includes: The first feature map and the second feature map are respectively processed based on a convolutional network in the first motion sensing sub-model to obtain a first optical flow map and a second optical flow map; mapping processing is performed on the first optical flow map and the second optical flow map based on a distortion network in the first motion sensing sub-model to obtain offsets; and the first fused feature map is determined based on the first optical flow map, the second optical flow map, and the offsets.

A person skilled in the art can understand that an optical flow map can represent a motion speed and a motion direction of each pixel point in two adjacent frames of images. An optical flow is an instantaneous speed of pixel motion of a spatially moving object on an observation and imaging plane. It is a method for finding out a corresponding relationship between a previous frame and a current frame by using changes of pixels in an image sequence in the time domain and a correlation between the adjacent frames, and calculating motion information of an object between the adjacent frames. The distortion network can be a network that contains a Backward Warping function, which achieves mapping between images. The offset can be data obtained based on mapping of an optical flow map and used for representing an offset of feature displacement.

In an example implementation, the first inter-frame feature map is input to the first motion sensing sub-model, and the first feature map and the second feature map can be respectively processed based on the convolutional network, so that the first optical flow map used for representing a motion speed and a motion direction of pixel points in two adjacent interlaced frames to be processed corresponding to the first feature map can be obtained, and the second optical flow map used for representing a motion speed and a motion direction of pixel points in two adjacent interlaced frames to be processed corresponding to the second feature map can be obtained. For example, mapping processing is performed on the first optical flow map and the second optical flow map based on the distortion network, so that the offset corresponding to the first optical flow map and the offset corresponding to the second optical flow map can be obtained. Finally, the first fused feature map can be obtained by fusing the first optical flow map, the second optical flow map, and the offsets corresponding to the two optical flow maps. In this way, the motion of the pixel points between the two adjacent interlaced frames to be processed can be sensed, and through feature alignment, the inter-frame feature content can be made more continuous, thereby enhancing the recovery effect on a moving object scene.

Continuing to refer to FIG. 3, the first fused feature map is determined based on the first optical flow map, the second optical flow map, and the offsets, which includes: residual processing is performed on the first optical flow map and the offset to obtain a first feature map to be spliced; residual processing is performed on the second optical flow map and the offset to obtain a second feature map to be spliced; and the first fused feature map is obtained by splicing the first feature map to be spliced with the second feature map to be spliced.

In an example embodiment, after the first optical flow map, the second optical flow map, and the offsets are obtained, the residual processing can be performed on the first optical flow map and the offset to align a plurality of optical flow features in the first optical flow map, thereby obtaining the first feature map to be spliced with the features aligned. Meanwhile, the residual processing can be performed on the second optical flow map and the offset to align a plurality of optical flow features in the second optical flow map, thereby obtaining the second feature map to be spliced with the features aligned. For example, the first feature map to be spliced and the second feature map to be spliced are spliced, thereby the first fused feature map may be obtained. This can achieve the feature alignment on the offset features of the interlaced frames to be processed, so that the interlaced frames to be processed are made more continuous, while an effect of mutual supplementation of details can be also achieved.

It should be noted that the process of processing the second inter-frame feature map based on the second motion sensing sub-model is the same as the process of processing the first inter-frame feature map based on the first motion sensing sub-model. This embodiment of the present disclosure will not make a specific elaboration here.

Exemplarily, the process of processing the first inter-frame feature map by the first motion sensing sub-model will be illustrated by taking three interlaced frames to be processed as an example. $D_1$, $D_2$, and $D_3$ can be taken as the interlaced frames to be processed. The three interlaced frames to be processed can be input to the first feature extraction branch, and the first feature map and the second feature map can be obtained, which may be represented by $F_1$ and $F_2$. For example, $F_1$ and $F_2$ can be input to the first motion sensing sub-model and respectively processed based on the convolutional layer, thereby a first optical flow map $IF_1$ and a second optical flow map $IF_2$ can be obtained. Then, mapping processing can be respectively performed on $IF_1$ and $IF_2$ based on the distortion network, thereby the offsets can be obtained. The residual processing is executed on $IF_1$ and the offset to obtain the first feature map to be spliced $F_1^{out}$, and the residual processing is executed on $IF_2$ and the offset to obtain the second feature map to be spliced $F_2^{out}$. Finally, $F_1^{out}$ and $F_2^{out}$ can be spliced, thereby a first fused feature map $F_{full}$ can be obtained.

S130. A target video is determined based on the at least two target video frames.

In this embodiment, after the target video frames are obtained, the target video frames can be spliced, thereby the target video composed of a plurality of consecutive target video frames can be obtained.

For example, a target video is determined based on the at least two target video frames, which includes: the at least two target video frames are spliced in a time domain to obtain the target video.

In this embodiment, since the target video frames carry corresponding timestamps, after the interlaced frames to be processed are processed based on the image fusion model, and the corresponding target video frames are output, the application can splice the plurality of video frames according to the timestamps corresponding to the target video frames to obtain the target video. It can be understood that by splicing the plurality of frames of images and generating the target video, the processed images can be displayed in a clear and coherent form.

A person skilled in the art should understand that after the target video is determined, the video can be played directly to display the processed video images on a display interface, or the target video can be stored in a specific space according to a preset path. The embodiments of the present disclosure do not make a specific limitation on this.

According to the technical solution of the embodiment of the present disclosure, after at least three interlaced frames to be processed are obtained, the at least three interlaced frames to be processed can be input to an image fusion model obtained by pre-training, to obtain at least two target video frames corresponding to the at least three interlaced frames to be processed. Finally, a target video is determined based on the at least two target video frames. When an interlaced video is displayed on an existing display device, the recovery effect on video images can be effectively improved. For example, for video images in a motion scene, a significant recovery effect can be achieved. Meanwhile, image wire-drawing, loss of details, and the like are avoided. The quality and definition of the video images are improved. The user experience is improved.

FIG. 4 is a flowchart of a video processing method according to an embodiment of the present disclosure. Based on the foregoing embodiments, a plurality of video frames to be processed in an original video can be processed, thereby obtaining interlaced frames to be processed. Its example implementation can be found in the technical solution of this embodiment. Technical terms that are the same as or correspond to those in the above embodiment will not be elaborated here.

As shown in FIG. 4, the method includes the following steps:

S210. A plurality of video frames to be processed corresponding to an original video are obtained.

Two video frames to be processed include an odd-numbered video frame and an even-numbered video frame. The odd-numbered video frame and the even-numbered video frame are determined based on an order of the video frames to be processed in the original video.

In this embodiment, the original video may be a video formed by splicing video frames subjected to interlaced scanning. The original video may be a video captured in real time by a terminal device, a video prestored in a storage space by application software, or a video uploaded by a user to a server or a client based on a preset video upload control. The embodiments of the present disclosure do not make a specific limitation on this. Exemplarily, the original video may be an early image video. The odd-numbered video frame may be a video frame that has a number corresponding to its order in the original video being an odd numb, has render pixel values in odd-numbered rows of pixel points which can be displayed in a rendering manner on a display interface, and has preset pixel values in even-numbered rows of pixel points which are displayed in the display interface in the form of black holes. Correspondingly, the even-numbered video frame may be a video frame that has a number corresponding to its order in the original video being an even number, has render pixel values in even-numbered rows of pixel points which can be displayed in a rendering manner on a display interface, and has preset pixel values in odd-numbered rows of pixel points which are displayed in the display interface in the form of black holes.

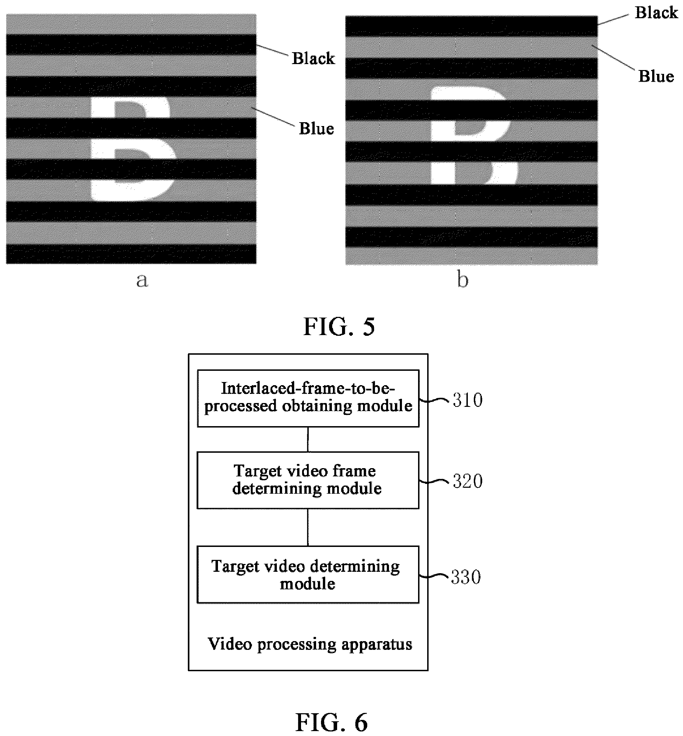

Exemplarily, as shown in FIG. 5, FIG. 5a shows an odd-numbered video frame, and FIG. 5b shows an even-numbered video frame. For the odd-numbered video frame, only odd-numbered rows are scanned and sampled. Therefore, only the pixel values of the odd-numbered rows of pixel points in FIG. 5a are render pixel values, which can be blue and displayed in the display interface in the rendering manner. The pixel values of the even-numbered rows of pixel points can be preset values, which can be black. In this case, when the even-numbered rows of pixel points are displayed in the display interface, they may be displayed in the display interface in the form of black holes. Correspondingly, for the even-numbered video frame, only even-numbered rows are scanned and sampled. Therefore, only the pixel values of the even-numbered rows of pixel points in FIG. 5b are render pixel values, which can be displayed in the display interface in the rendering manner. The pixel values of the odd-numbered rows of pixel points can be preset values. In this case, when the odd-numbered rows of pixel points are displayed in the display interface, they may be displayed in the display interface in the form of black holes.

S220. Two adjacent video frames to be processed are fused to obtain an interlaced frame to be processed.

In practical applications, after the original video is obtained, the original video can be analyzed based on a pre-written program to obtain a plurality of video frames to be processed. For example, starting from a first video frame to be processed, two adjacent video frames to be processed are fused to obtain an interlaced frame to be processed.

It should be noted that in the odd-numbered video frame, only odd-numbered rows of data contain pixel points, and in the even-numbered video frame, only even-numbered rows of data contain pixel points. Therefore, when the two adjacent video frames to be processed are fused, data containing pixel points in the odd-numbered video frame and data containing pixel points in the even-numbered video frame can be respectively extracted, so that the interlaced frames to be processed that simultaneously contain the odd-numbered rows of pixel points and the even-numbered rows of pixel points can be obtained.

For example, two adjacent video frames to be processed are fused to obtain an interlaced frame to be processed, which includes: odd-numbered rows of data in the odd-numbered video frame and even-numbered rows of data in the even-numbered video frame are extracted; and the odd-numbered rows of data and the even-numbered rows of data are fused to obtain the interlaced frame to be processed.

In this embodiment, the odd-numbered rows of data can be pixel point information in the odd-numbered rows. The even-numbered rows of data can be pixel point information in the even-numbered rows. A person skilled in the art should understand that when the original video is displayed on the display interface based on interlaced scanning, the pixel point information in the odd-numbered rows can be sampled first to obtain the odd-numbered video frame. Then, the pixel point information of the even-numbered rows can be sampled to obtain the even-numbered video frame. The pixel point sampled information of the odd-numbered rows in the odd-numbered video frame can be used as the odd-numbered rows of data, and the pixel point sampled information of the even-numbered rows in the even-numbered video frame can be used as the even-numbered rows of data.

In practical applications, after the plurality of video frames to be processed are obtained, for two adjacent video frames to be processed, the odd-numbered rows of data of the odd-numbered video frame can be extracted, and the even-numbered rows of data of the even-numbered video frame can be extracted. For example, the odd-numbered rows of data and the even-numbered rows of data are fused to obtain the interlaced frame to be processed. In this way, the interlaced frames to be processed that contain both the pixel information of the odd-numbered rows of pixel points and the pixel information of the even-numbered rows of pixel points can be obtained, so that the target video frames that meets the need of a user can be obtained by processing the interlaced frames to be processed.

S230. At least three interlaced frames to be processed are obtained.

S240. The at least three interlaced frames to be processed are input to an image fusion model obtained by pre-training, to obtain at least two target video frames corresponding to the at least three interlaced frames to be processed.

S250. A target video is determined based on the at least two target video frames.

According to the technical solution of the embodiment of the present disclosure, a plurality of video frames to be processed corresponding to an original video are obtained; two adjacent video frames to be processed are fused to obtain an interlaced frame to be processed. Then, at least three interlaced frames to be processed are obtained, and the at least three interlaced frames to be processed are input to an image fusion model obtained by pre-training, to obtain at least two target video frames corresponding to the at least three interlaced frames to be processed. Finally, a target video is determined based on the at least two target video frames. When the interlaced video is displayed on an existing display device, the recovery effect on video images can be effectively improved. For example, for video images in a motion scene, a significant recovery effect can be achieved. Meanwhile, image wire-drawing, loss of details, and the like are avoided. The quality and definition of the video images are improved. The user experience is improved.

FIG. 6 is a schematic structural diagram of a video processing apparatus according to an embodiment of the present disclosure. As shown in FIG. 6, the apparatus includes: an interlaced-frame-to-be-processed obtaining module 310, a target video frame determining module 320, and a target video determining module 330.

The interlaced-frame-to-be-processed obtaining module 310 is configured to obtain at least three interlaced frames to be processed, wherein each interlaced frame to be processed is determined based on two adjacent video frames to be processed.

The target video frame determining module 320 is configured to: input the at least three interlaced frames to be processed to an image fusion model obtained by pre-training, to obtain at least two target video frames corresponding to the at least three interlaced frames to be processed, wherein the image fusion model includes a feature processing sub-model and a motion sensing sub-model.

The target video determining module 330 is configured to determine a target video based on the at least two target video frames.

Based on the above technical solution, the apparatus further includes: a video-frame-to-be-processed obtaining module and a video-frame-to-be-processed processing module.

The video-frame-to-be-processed obtaining module is configured to: before obtaining the at least three interlaced frames to be processed, obtain a plurality of video frames to be processed corresponding to an original video.

The video-frame-to-be-processed processing module is configured to fuse two adjacent video frames to be processed to obtain the interlaced frames to be processed. The two video frames to be processed include an odd-numbered video frame and an even-numbered video frame; and the odd-numbered video frame and the even-numbered video frame are determined based on an order of the video frames to be processed in the original video.

Based on the above technical solution, the video-frame-to-be-processed processing module includes: a data extraction unit and a data processing unit.

The data extraction unit is configured to extract odd-numbered rows of data in the odd-numbered video frame and even-numbered rows of data in the even-numbered video frame.

The data processing unit is configured to fuse the odd-numbered rows of data and the even-numbered rows of data to obtain the interlaced frame to be processed.

Based on the above technical solution, the image fusion model includes a feature processing sub-model, a motion sensing sub-model, and a 2D convolutional layer.

Based on the above technical solution, the feature processing sub-model includes a first feature extraction branch and a second feature extraction branch;

an output of the first feature extraction branch is an input of a first motion sensing sub-model in the motion sensing sub-model, and an output of the second feature extraction branch is an input of a second motion sensing sub-model in the motion sensing sub-model; and

an output of the first motion sensing sub-model and an output of the second motion sensing sub-model are inputs of the 2D convolutional layer to cause the 2D convolutional layer to output the target video frame.

Based on the above technical solution, the first feature extraction branch includes a structural feature extraction network and a structural feature fusion network; and the second feature extraction branch includes a detail feature extraction network and a detail feature fusion network.

Based on the above technical solution, the target video frame determining module 320 includes: an equal-proportional feature extraction sub-module, an odd-even field feature extraction sub-module, a structural feature processing sub-module, a detail feature processing sub-module, a first fused feature map determining sub-module, a second fused feature map determining sub-module, and a target video frame determining sub-module.

The equal-proportional feature extraction sub-module is configured to: perform equal-proportional feature extraction on the at least three interlaced frames to be processed based on the structural feature extraction network, to obtain structural features corresponding to the interlaced frames to be processed.

The odd-even field feature extraction sub-module is configured to: perform odd-even field feature extraction on the at least three interlaced frames to be processed based on the detail feature extraction network, to obtain detail features corresponding to the interlaced frames to be processed.

The structural feature processing sub-module is configured to: process the structural features based on the structural feature fusion network to obtain a first inter-frame feature map between two adjacent interlaced frames to be processed.

The detail feature processing sub-module is configured to: process the detail features based on the detail feature fusion network to obtain a second inter-frame feature map between two adjacent interlaced frames to be processed.

The first fused feature map determining sub-module is configured to: process the first inter-frame feature map based on the first motion sensing sub-model to obtain a first fused feature map.

The second fused feature map determining sub-module is configured to: process the second inter-frame feature map based on the second motion sensing sub-model to obtain a second fused feature map.

The target video frame determining sub-module is configured to: process the first fused feature map and the second fused feature map based on the 2D convolutional layer to obtain the at least two target video frames.

Based on the above technical solution, the first fused feature map determining sub-module includes: a feature map processing unit, an optical flow mapping processing unit, and a first fused feature map determining unit.

The feature map processing unit is configured to: respectively process the first feature map and the second feature map based on a convolutional network in the first motion sensing sub-model to obtain a first optical flow map and a second optical flow map.

The optical flow mapping processing unit is configured to: perform mapping processing on the first optical flow map and the second optical flow map based on a distortion network in the first motion sensing sub-model to obtain offsets.

The first fused feature map determining unit is configured to determine the first fused feature map based on the first optical flow map, the second optical flow map, and the offsets.

Based on the above technical solution, the first fused feature map determining unit is configured to: perform residual processing on the first optical flow map and the offset to obtain a first feature map to be spliced; perform residual processing on the second optical flow map and the offset to obtain a second feature map to be spliced; obtain the first fused feature map by splicing the first feature map to be spliced with the second feature map to be spliced.

Based on the above technical solution, the target video determining module 330 is configured to splice the at least two target video frames in a time domain to obtain the target video.

According to the technical solution of the embodiment of the present disclosure, after at least three interlaced frames to be processed are obtained, the at least three interlaced frames to be processed can be input to an image fusion model obtained by pre-training, to obtain at least two target video frames corresponding to the at least three interlaced frames to be processed. Finally, a target video is determined based on the at least two target video frames. When an interlaced video is displayed on an existing display device, the recovery effect on video images can be effectively improved. For example, for video images in a motion scene, a significant recovery effect can be achieved. Meanwhile, image wire-drawing, loss of details, and the like are avoided. The quality and definition of the video images are improved. The user experience is improved.

The video processing apparatus provided according to this embodiment of the present disclosure can implement the video processing method provided in any embodiment of the present disclosure, and includes corresponding functional modules for implementing the method and corresponding beneficial effects.

It is worth noting that the plurality of units and modules included in the above apparatus are only divided according to a functional logic, but are not limited to the above division, as long as the corresponding functions can be achieved. In addition, the specific names of the plurality of functional units are only for the purpose of distinguishing and are not used to limit the protection scope of the embodiments of the present disclosure.

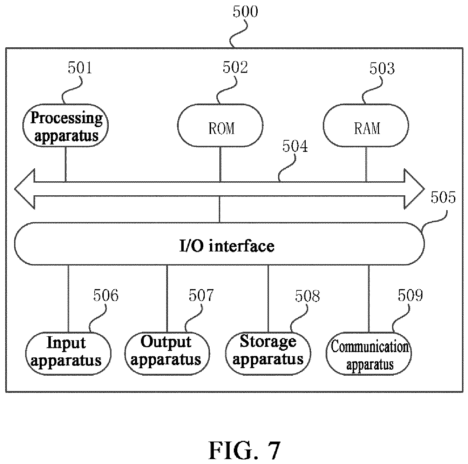

FIG. 7 is a schematic structural diagram of an electronic device provided according to an embodiment of the present disclosure. Reference is now made to FIG. 7 below, which illustrates a schematic structural diagram of an electronic device (e.g., a terminal device or a server in FIG. 7) 500 suitable for implementing an embodiment of the present disclosure. The terminal device in the embodiments of the present disclosure may include, but is not limited to, a mobile phone, a laptop, a digital broadcast receiver, a Personal Digital Assistant (PDA), a Portable Android Device (PAD), a Portable Media Player (PMP), a mobile terminal such as a vehicle-mounted terminal (for example, a vehicle-mounted navigation terminal), and a fixed terminal such as digital television (TV) and a desktop computer. The electronic device shown in FIG. 7 is only an example and should not impose any limitations on the functionality and scope of use of the embodiments of the present disclosure.

As shown in FIG. 7, the electronic device 500 may include a processing apparatus (such as a central processing unit and graphics processing unit) 501 that can perform various appropriate actions and processing according to programs stored in a Read-Only Memory (ROM) 502 or loaded from a storage apparatus 508 to a Random Access Memory (RAM) 503. Various programs and data required for operations of the electronic device 500 may also be stored in the RAM 503. The processing apparatus 501, the ROM 502, and the RAM 503 are connected to each other through a bus 504. An Input/Output (I/O) interface 505 is also connected to the bus 504.

Usually, following apparatuses can be connected to the I/O interface 505: an input apparatus 506 including a touch screen, a touchpad, a keyboard, a mouse, a camera, a microphone, an accelerometer, a gyroscope, and the like; an output apparatus 507 including a Liquid Crystal Display (LCD), a speaker, a vibrator, and the like; a storage apparatus 508 including a magnetic tape, a hard disk, and the like; and a communication apparatus 509. The communication apparatus 509 can allow the electronic device 500 to wirelessly or wiredly communicate with other devices to exchange data. Although FIG. 7 shows the electronic device 500 with multiple apparatuses, it should be understood that the electronic device 500 is not required to implement or have all the apparatuses shown, and can alternatively implement or have more or fewer apparatuses.

According to the embodiments of the present disclosure, the process described in the reference flowchart above can be implemented as a computer software program. For example, the embodiments of the present disclosure include a computer program product, including a computer program carried on a non-transitory computer-readable medium, and the computer program includes program codes used for performing the methods shown in the flowcharts. In such an embodiment, the computer program may be downloaded and installed from a network through the communication apparatus 509, or installed from the storage apparatus 508, or installed from the ROM 502. When the computer program is executed by the processing apparatus 501, the above-mentioned functions defined in the methods of the embodiments of the present disclosure are executed.

Messages or names of information interacted between a plurality of apparatuses in the implementations of the present disclosure are only for illustrative purposes and are not intended to limit the messages or the scope of the information.

The electronic device provided in this embodiment of the present disclosure and the video processing method provided in the above embodiment belong to the same concept. Technical details not fully described in this embodiment can be found in the above embodiment, and this embodiment has the same effects as the above embodiment.

The embodiments of the present disclosure provide a computer storage medium having a computer program stored thereon. The program, when executed by a processor, implements the video processing method provided in the above embodiment.

It should be noted that the computer-readable medium mentioned in the present disclosure can be a computer-readable signal medium, a computer-readable storage medium, or any combination thereof. The computer-readable storage medium can be, for example, but not limited to, electric, magnetic, optical, electromagnetic, infrared, or semiconductor systems, apparatuses, or devices, or any combination thereof. More specific examples of the computer-readable storage medium may include, but are not limited to: an electrical connection with one or more wires, a portable computer disk, a hard disk, a RAM, a ROM, an Erasable Programmable Read Only Memory (EPROM) or flash memory, an optical fiber, a Compact Disc Read-Only Memory (CD-ROM), an optical storage device, a magnetic storage device, or any suitable combination thereof. In the present disclosure, the computer-readable storage medium may be any tangible medium that contains or stores a program, and the program can be used by or in combination with an instruction execution system, apparatus, or device. In the present disclosure, the computer-readable signal media may include data signals propagated in a baseband or as part of a carrier wave, which carries computer-readable program codes. The propagated data signals can be in various forms, including but not limited to: electromagnetic signals, optical signals, or any suitable combination thereof. The computer-readable signal medium may also be any computer-readable medium other than a computer-readable storage medium. The computer-readable signal medium can send, propagate, or transmit programs for use by or in combination with an instruction execution system, apparatus, or device. The program codes contained in the computer-readable medium can be transmitted using any suitable medium, including but are not limited to: a wire, an optical cable, a Radio Frequency (RF), and the like, or any suitable combination thereof.

In some implementations, clients and servers can communicate using any currently known or future-developed network protocol such as a HyperText Transfer Protocol (HTTP), and can be interconnected with digital data communication in any form or medium (for example, a communication network). Examples of the communication network include a Local Area Network (LAN), a Wide Area Network (WAN), an internet (such as an Internet), a point-to-point network (such as an ad hoc point-to-point network, and any currently known or future developed network.

The computer-readable medium may be included in the electronic device or exist alone and is not assembled into the electronic device.

The above computer-readable medium carries one or more programs. The one or more programs, when executed by the electronic device, cause the electronic device to:

The above computer-readable medium carries one or more programs. The one or more programs, when run by the electronic device, cause the electronic device to:

obtain at least three interlaced frames to be processed, wherein each interlaced frame to be processed is determined based on two adjacent video frames to be processed;

input the at least three interlaced frames to be processed to an image fusion model obtained by pre-training, to obtain at least two target video frames corresponding to the at least three interlaced frames to be processed, wherein the image fusion model includes a feature processing sub-model and a motion sensing sub-model; and

determine a target video based on the at least two target video frames.

Computer program codes for performing the operations of the present disclosure may be written in one or more programming languages or a combination thereof. The above programming languages include but are not limited to object-oriented programming languages such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In a case where a remote computer is involved, the remote computer can be connected to a user computer through any kind of networks, including a LAN or a Wide Area Network WAN, or can be connected to an external computer (for example, through an Internet using an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions used for implementing specified logic functions. In some implementations used as alternatives, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also be noted that each block in a block diagram and/or a flowchart and a combination of blocks in the block diagram and/or the flowchart may be implemented by using a dedicated hardware-based system configured to perform a specified function or operation, or may be implemented by using a combination of dedicated hardware and a computer instruction.

The units described in the embodiments of the present disclosure can be implemented through software or hardware. The name of the unit does not constitute a limitation on the unit itself. For example, the first obtaining unit can also be described as "a unit that obtains at least two Internet protocol addresses".

The functions described herein above may be performed, at least in part, by one or a plurality of hardware logic components. For example, nonrestrictively, example hardware logic components that can be used include: a Field Programmable Gate Array (FPGA), an Application Specific Integrated Circuit (ASIC), Application Specific Standard Product (ASSP), a System on Chip (SOC), a Complex Programmable Logic Device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable medium may include an electrical connection based on one or more wires, a portable computer disk, a hard disk, a RAM, a ROM, an EPROM or flash memory, an optical fiber, a CD-ROM, an optical storage device, a magnetic storage device, or any suitable combinations of the above contents.

According to one or more embodiments of the present disclosure, [Example I] provides a video processing method. The method includes:

obtaining at least three interlaced frames to be processed, wherein each interlaced frame to be processed is determined based on two adjacent video frames to be processed;

inputting the at least three interlaced frames to be processed to an image fusion model obtained by pre-training, to obtain at least two target video frames corresponding to the at least three interlaced frames to be processed, wherein the image fusion model includes a feature processing sub-model and a motion sensing sub-model; and

determining a target video based on the at least two target video frames.

According to one or more embodiments of the present disclosure, [Example II] provides a video processing method. Before obtaining the at least three interlaced frames to be processed, the method further includes:

obtaining a plurality of video frames to be processed corresponding to an original video; and

fusing two adjacent video frames to be processed to obtain an interlaced frame to be processed,

wherein the two video frames to be processed include an odd-numbered video frame and an even-numbered video frame; and the odd-numbered video frame and the even-numbered video frame are determined based on an order of the video frames to be processed in the original video.

According to one or more embodiments of the present disclosure, [Example III] provides a video processing method, in which fusing the two adjacent video frames to be processed to obtain the interlaced frame to be processed includes:

extracting odd-numbered rows of data in the odd-numbered video frame and even-numbered rows of data in the even-numbered video frame; and

fusing the odd-numbered row of data and the even-numbered row of data to obtain the interlaced frame to be processed.

According to one or more embodiments of the present disclosure, [Example IV] provides a video processing method, in which the image fusion model includes a feature processing sub-model, a motion sensing sub-model, and a 2D convolutional layer.

According to one or more embodiments of the present disclosure, [Example V] provides a video processing method. The method further includes:

the feature processing sub-model includes a first feature extraction branch and a second feature extraction branch;

an output of the first feature extraction branch is an input of a first motion sensing sub-model in the motion sensing sub-model, and an output of the second feature extraction branch is an input of a second motion sensing sub-model in the motion sensing sub-model; and

an output of the first motion sensing sub-model and an output of the second motion sensing sub-model are inputs of the 2D convolutional layer to cause the 2D convolutional layer to output the target video frame.

According to one or more embodiments of the present disclosure, [Example VI] provides a video processing method, in which first feature extraction branch includes a structural feature extraction network and a structural feature fusion network; and the second feature extraction branch includes a detail feature extraction network and a detail feature fusion network.

According to one or more embodiments of the present disclosure, [Example VII] provides a video processing method, in which inputting the at least three interlaced frames to be processed to the image fusion model obtained by pre-training, to obtain at least two target video frames corresponding to the at least three interlaced frames to be processed includes:

performing equal-proportiona feature extraction on the at least three interlaced frames to be processed based on the structural feature extraction network, to obtain structural features corresponding to the interlaced frames to be processed;

performing odd-even field feature extraction on the at least three interlaced frames to be processed based on the detail feature extraction network, to obtain detail features corresponding to the interlaced frames to be processed;

processing the structural features based on the structural feature fusion network to obtain a first inter-frame feature map between two adjacent interlaced frames to be processed;

processing the detail features based on the detail feature fusion network to obtain a second inter-frame feature map between two adjacent interlaced frames to be processed;

processing the first inter-frame feature map based on the first motion sensing sub-model to obtain a first fused feature map;

processing the second inter-frame feature map based on the second motion sensing sub-model to obtain a second fused feature map; and

processing the first fused feature map and the second fused feature map based on the 2D convolutional layer to obtain the at least two target video frames.

According to one or more embodiments of the present disclosure, [Example VIII] provides a video processing method, in which the first inter-frame feature map includes a first feature map and a second feature map; and processing the first inter-frame feature map based on the first motion sensing sub-model to obtain a first fused feature map includes:

respectively processing the first feature map and the second feature map based on a convolutional network in the first motion sensing sub-model to obtain a first optical flow map and a second optical flow map;

performing mapping processing on the first optical flow map and the second optical flow map based on a distortion network in the first motion sensing sub-model to obtain offsets; and

determining the first fused feature map based on the first optical flow map, the second optical flow map, and the offsets.

According to one or more embodiments of the present disclosure, [Example IX] provides a video processing method, in which determining the first fused feature map based on the first optical flow map, the second optical flow map, and the offsets includes:

performing residual processing on the first optical flow map and the offset to obtain a first feature map to be spliced;

performing residual processing on the second optical flow map and the offset to obtain a second feature map to be spliced; and

obtaining the first fused feature map by splicing the first feature map to be spliced with the second feature map to be spliced.

According to one or more embodiments of the present disclosure, [Example X] provides a video processing method, in which determining a target video based on the at least two target video frames includes: splicing the at least two target video frames in a time domain to obtain the target video.

According to one or more embodiments of the present [Example XI] provides a video processing apparatus. The apparatus includes:

an interlaced-frame-to-be-processed obtaining module, configured to obtain at least three interlaced frames to be processed, wherein each interlaced frame to be processed is determined based on two adjacent video frames to be processed;

a target video frame determining module, configured to: input the at least three interlaced frames to be processed to an image fusion model obtained by pre-training, to obtain at least two target video frames corresponding to the at least three interlaced frames to be processed, wherein the image fusion model includes a feature processing sub-model and a motion sensing sub-model; and

a target video determining module, configured to determine a target video based on the at least two target video frames.

In addition, although various operations are depicted in a specific order, this should not be understood as requiring these operations to be executed in the specific order shown or in a sequential order. In certain environments, multitasking and parallel processing may be advantageous. Similarly, although several specific implementation details are included in the above discussion, these should not be interpreted as limiting the scope of the present disclosure. Some features described in the context of individual embodiments can also be combined and implemented in a single embodiment. On the contrary, various features that are described in the context of the single embodiment may also be implemented in a plurality of embodiments separately or in any suitable sub-combinations.

## Claims

1. A video processing method, comprising:

obtaining at least three interlaced frames to be processed, wherein each interlaced frame to be processed is determined based on two adjacent video frames to be processed; inputting the at least three interlaced frames to be processed to an image fusion model obtained by pre-training, to obtain at least two target video frames corresponding to the at least three interlaced frames to be processed, wherein the image fusion model includes a feature processing sub-model and a motion sensing sub-model;

and
determining a target video based on the at least two target video frames.

2. The method according to claim 1, wherein the method further comprises, before obtaining the at least three interlaced frames to be processed:

obtaining a plurality of video frames to be processed corresponding to an original video; and
fusing two adjacent video frames to be processed to obtain an interlaced frame to be processed,
wherein the two video frames to be processed comprise an odd-numbered video frame and an even-numbered video frame; and the odd-numbered video frame and the even-numbered video frame are determined based on an order of the video frames to be processed in the original video.

3. The method according to claim 2, wherein fusing the two adjacent video frames to be processed to obtain the interlaced frame to be processed comprises:

extracting odd-numbered rows of data in the odd-numbered video frame and even-numbered rows of data in the even-numbered video frame; and
fusing the odd-numbered rows of data and the even-numbered rows of data to obtain the interlaced frame to be processed.

4. The method according to claim 1, wherein the image fusion model further comprises a 2D convolutional layer.

5. The method according to claim 4, further comprises:

the feature processing sub-model comprises a first feature extraction branch and a second feature extraction branch;
an output of the first feature extraction branch is an input of a first motion sensing sub-model in the motion sensing sub-model, and an output of the second feature extraction branch is an input of a second motion sensing sub-model in the motion sensing sub-model; and
an output of the first motion sensing sub-model and an output of the second motion sensing sub-model are inputs of the 2D convolutional layer to cause the 2D convolutional layer to output the target video frame.

6. The method according to claim 5, wherein the first feature extraction branch comprises a structural feature extraction network and a structural feature fusion network; and the second feature extraction branch comprises a detail feature extraction network and a detail feature fusion network.

7. The method according to claim 6, wherein inputting the at least three interlaced frames to be processed to the image fusion model obtained by pre-training, to obtain the at least two target video frames corresponding to the at least three interlaced frames to be processed, comprises:

performing equal-proportional feature extraction on the at least three interlaced frames to be processed based on the structural feature extraction network, to obtain structural features corresponding to the interlaced frames to be processed;
performing odd-even field feature extraction on the at least three interlaced frames to be processed based on the detail feature extraction network, to obtain detail features corresponding to the interlaced frames to be processed;
processing the structural features based on the structural feature fusion network to obtain a first inter-frame feature map between two adjacent interlaced frames to be processed, and processing the detail features based on the detail feature fusion network to obtain a second inter-frame feature map between two adjacent interlaced frames to be processed;
processing the first inter-frame feature map based on the first motion sensing sub-model to obtain a first fused feature map, and processing the second inter-frame feature map based on the second motion sensing sub-model to obtain a second fused feature map; and
processing the first fused feature map and the second fused feature map based on the 2D convolutional layer to obtain the at least two target video frames.

8. The method according to claim 7, wherein the first inter-frame feature map comprises a first feature map and a second feature map; and processing the first inter-frame feature map based on the first motion sensing sub-model to obtain a first fused feature map comprises:

respectively processing the first feature map and the second feature map based on a convolutional network in the first motion sensing sub-model to obtain a first optical flow map and a second optical flow map;
performing mapping processing on the first optical flow map and the second optical flow map based on a distortion network in the first motion sensing sub-model to obtain offsets; and
determining the first fused feature map based on the first optical flow map, the second optical flow map, and the offsets.

9.  The method according to claim 8, wherein determining the first fused feature map based on the first optical flow map, the second optical flow map, and the offsets comprises:

    performing residual processing on the first optical flow map and the offsets to obtain a first feature map to be spliced;
    performing residual processing on the second optical flow map and the offsets to obtain a second feature map to be spliced; and
    obtaining the first fused feature map by splicing the first feature map to be spliced with the second feature map to be spliced.

10. The method according to claim 1, wherein determining the target video based on the at least two target video frames comprises:

    splicing the at least two target video frames in a time domain to obtain the target video.

11. A video processing apparatus, comprising:

    an interlaced-frame-to-be-processed obtaining module, configured to obtain at least three interlaced frames to be processed, wherein each interlaced frame to be processed is determined based on two adjacent video frames to be processed;
    a target video frame determining module, configured to: input the at least three interlaced frames to be processed to an image fusion model obtained by pre-training, to obtain at least two target video frames corresponding to the at least three interlaced frames to be processed, wherein the image fusion model includes a feature processing sub-model and a motion sensing sub-model; and
    a target video determining module, configured to determine a target video based on the at least two target video frames.

12. An electronic device, comprising:

    one or more processors; and
    a storage apparatus, configured to store one or more programs,
    wherein the one or more programs, when executed by the one or more processors, cause the one or more processors to implement the video processing method according to any of claims 1 to 10.

13. A storage medium comprising computer-executable instructions, wherein the computer-executable instructions, when executed by a computer processor, are used for performing the video processing method according to any of claims 1 to 10.

Obtain at least three interlaced frames to be processed ⌐ S110

Input the at least three interlaced frames to be processed to an image fusion model obtained by pre-training, to obtain at least two target video frames corresponding to the at least three interlaced frames to be processed ⌐ S120

Determine a target video based on the at least two target video frames ⌐ S130

FIG. 1

Structural feature fusion network

| Interlaced frame to be processed | Structural feature extraction network | First motion sensing sub-model |
| Interlaced frame to be processed | | 2D convolutional layer |
| Interlaced frame to be processed | Detail feature extraction network | Second motion sensing sub-model |

| Target video frame |
| Target video frame |

Detail feature fusion network

FIG. 2

First feature
map

First feature map
to be spliced

```
[First feature map] → [Convol-utional network] → [First optical flow map] → [Distortion network] → ⊕ → [First feature map to be spliced]
```

```
[Second feature map] → [Convol-utional network] → [Second optical flow map] → [Distortion network] → ⊕ → [Second feature map to be spliced]
```

⊕ → Ⓒ → First fused feature map

Second feature
map

Second feature
map to be spliced

## FIG. 3

Obtain a plurality of video frames to be processed
corresponding to an original video ∿ S210

Fuse two adjacent video frames to be processed to obtain
an interlaced frame to be processed ∿ S220

Obtain at least three interlaced frames to be processed ∿ S230

Input the at least three interlaced frames to be processed to
an image fusion model obtained by pre-training, to obtain at
least two target video frames corresponding to the at least three
interlaced frames to be processed ∿ S240

Determine a target video based on the at least two
target video frames ∿ S250

## FIG. 4

FIG. 5

FIG. 6

FIG. 7

## INTERNATIONAL SEARCH REPORT

| International application No. |
| --- |
| **PCT/CN2023/121354** |

### A. CLASSIFICATION OF SUBJECT MATTER

H04N 7/01(2006.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CJFD, VEN, WOTXT, USTXT, EPTXT, IEEE: 视频, 帧, 隔行, 交错, 去交错, 反交错, 去隔行, 交错帧, 神经网络, 深度学习, 融合, 特征, 提取, 运动, 光流; video, frame, interlace, de-interlace, de-interlacing, neural network, deep learning, fusion, feature, extract, motion, optical flow

### C. DOCUMENTS CONSIDERED TO BE RELEVANT

| Category* | Citation of document, with indication, where appropriate, of the relevant passages | Relevant to claim No. |
| --- | --- | --- |
| Y | US 2022014708 A1 (DISNEY ENTPR INC.; ETH ZUERICH;) 13 January 2022 (2022-01-13) description, paragraphs [0018]-[0100], and figures 1-5 | 1-4, 10-13 |
| PX | CN 115633144 A (DOUYIN VISION CO., LTD.) 20 January 2023 (2023-01-20) claims 1-13 | 1-13 |
| A | CN 112750094 A (HEFEI UNIVERSITY OF TECHNOLOGY) 04 May 2021 (2021-05-04) entire document | 1-13 |
| A | CN 108134938 A (ZTE CORP.) 08 June 2018 (2018-06-08) entire document | 1-13 |
| A | CN 112218081 A (IFREECOMM TECHNOLOGY CO., LTD.) 12 January 2021 (2021-01-12) entire document | 1-13 |
| A | KR 101979584 B1 (SK TELECOM CO., LTD. et al.) 17 May 2019 (2019-05-17) entire document | 1-13 |

☑ Further documents are listed in the continuation of Box C.     ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 December 2023** | **31 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2023/121354** |

| C. | DOCUMENTS CONSIDERED TO BE RELEVANT | |
|---|---|---|
| Category* | Citation of document, with indication, where appropriate, of the relevant passages | Relevant to claim No. |
| Y | 王翀等 (WANG, Chong et al.). "基于光流法的视频去隔行方法 (Non-official translation: Video Deinterlacing Method Based on Optical Flow Method)" 信息化研究 (Informatization Research), Vol. 39, No. 01, 20 February 2013 (2013-02-20), page 53 | 1-4, 10-13 |

Form PCT/ISA/210 (second sheet) (July 2022)

**INTERNATIONAL SEARCH REPORT**
Information on patent family members

International application No.

**PCT/CN2023/121354**

| Patent document cited in search report | | | Publication date (day/month/year) | Patent family member(s) | | | Publication date (day/month/year) |
|---|---|---|---|---|---|---|---|
| US | 2022014708 | A1 | 13 January 2022 | US | 11570397 | B2 | 31 January 2023 |
| CN | 115633144 | A | 20 January 2023 | None | | | |
| CN | 112750094 | A | 04 May 2021 | None | | | |
| CN | 108134938 | A | 08 June 2018 | None | | | |
| CN | 112218081 | A | 12 January 2021 | None | | | |
| KR | 101979584 | B1 | 17 May 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211294643